# EUROPEAN PATENT SPECIFICATION

(11) **EP 3 349 101 B1**
(45) Date of publication and mention of the grant of the patent: **18.12.2019**
(21) Application number: 18151597.4
(22) Date of filing: 15.01.2018
(51) Int. Cl.: G06F 3/01, G06F 3/0346, G02B 27/01, G06T 19/00

(54) **MOVEMENT TRACKING METHOD AND MOVEMENT TRACKING SYSTEM**
BEWEGUNGSVERFOLGUNGSVERFAHREN UND BEWEGUNGSVERFOLGUNGSSYSTEM
PROCÉDÉ ET SYSTÈME DE SUIVI DE MOUVEMENT

(30) Priority: 16.01.2017 US 201762446538 P; 22.12.2017 US 201715852256
(43) Date of publication of application: 18.07.2018
(73) Proprietor: HTC Corporation, Taoyuan City 330, (TW)
(72) Inventor: Lu, Hsin-Yu, 330 Taoyuan City (TW)
(74) Representative: Murgitroyd & Company

(56) References cited:
- GB-A- 2 533 788
- US-A1- 2014 375 679
- US-A1- 2015 146 926
- US-B1- 9 024 972

## Description

### Field of Invention

The present invention relates to a movement tracking method and a movement tracking system. More particularly, the present invention relates to movement tracking method and a movement tracking system for improving the quality of tracking technology.

### Description of Related Art

Recently, virtual reality system is becoming increasingly popular. Virtual reality system can be applied for movies, virtual reality, or other interactive applications. In general, a head mounted display is an important part of a virtual reality system. Users can see the virtual world by wearing the head mounted display. To be more specifically, the head mounted display typically consist of a display or plurality of displays and relay optics which deliver computer generated graphics to the eyes of users.

In common user behavior, user may move their head to interact with the virtual content. If tracking technology can't provide exact the position measured, not corresponding to the movement of the user, the user may feel uncomfortable or get seasick. Therefore, it is important to provide a method and a system to generate the correct and exact variation in movement in virtual reality corresponding to the movement of the user. The following documents may be useful for understanding such related art:
US9024972 B1 describes receiving measurements from one or more inertial sensors (i.e. accelerometer and angular rate gyros) attached to a device with a camera or other environment capture capability. The inertial measurements may be combined with pose estimates obtained from computer vision algorithms executing with real time camera images. Using such inertial measurements, a system may more quickly and efficiently obtain higher accuracy orientation estimates of the device with respect to an object known to be stationary in the environment. Inertial sensor data may be used if the image processing algorithm fails and optical tracking is lost over multiple frames. This may occur, for example, under conditions of image blur during rapid device movement. In such a case, the inertial sensor data may be used to maintain updated device pose estimates throughout the period of the blur and preserve the anchoring of rendered augmentation constructs.

US2015146926 A1 describes systems, apparatus and methods in a mobile device to enable a depth sensor only when relaying on a camera without a depth sensor may provide inadequate pose estimates images, for example, accelerating or moving too fast, when inertial sensor measurements are too noisy, light levels are too low or high, an image is too blurry, or a rate of images is too slow.

GB2533788 A describes a device and a method comprising, capturing a sequence of image frames Fj by a portable device camera; obtaining movement data by using an inertial sensor of the portable device; and determining a sampling frame rate fA according to the movement data. Optionally, a blurring value of each point in the point cloud is determined based on movement data, a subset of the 3D point cloud is chosen based on the blurring values, and the position of the camera is determined using the chosen subset.

US2014375679 A1 describes a process for providing an augmented reality image on a HMD while reducing motion blur. If there is a significant potential for motion blur, determining a row duty cycle and a panel duty cycle which reduce motion blur while maintaining brightness, based on the rotation of the user's head.

### SUMMARY

It is an object of the present invention to provide a movement tracking method as per claim 1 and a movement tracking system as per claim 7, for an electronic apparatus. Further enhancements are defined by the dependent claims.

Accordingly, the movement tracking method and the movement tracking system can precisely calculate the moving distance of the electronic apparatus according to the movement data, and the frame content shown by the electronic apparatus is generated according to the moving distance. The user can consistently see the frame content corresponding to the movement of his/her head. As such, the user can truthfully interact with the virtual reality content and pleasantly watch the virtual reality content.

### BRIEF DESCRIPTION OF THE DRAWINGS

Fig. 1A-1B are a block diagrams of a movement tracking system according to one exemplary embodiment of the present disclosure.
Fig. 2 is a flowchart of a movement tracking method according to the present invention.
Figs. 3A-3B depict schematic diagrams of capturing frames according to one exemplary embodiment of present disclosure.
Fig. 4 depicts schematic diagram of captured frames according to one exemplary embodiment of present disclosure.

### DETAILED DESCRIPTION OF DISCLOSED EMBODIMENTS

Reference will now be made in detail to the present exemplary embodiments of the invention, examples of which are illustrated in the accompanying drawings. Wherever possible, the same reference numbers are used in the drawings and the description to refer to the same or like parts.

It will be understood that, although the terms "first," "second," "current," etc. may be used herein to describe various elements, these elements should not be limited by these terms. These terms are only used to distinguish one element from another. For example, a first element could be termed a second element, and, similarly, a second element could be termed a first element, without departing from the scope of the embodiments.

It will be understood that, in the description herein and throughout the claims that follow, when an element is referred to as being "connected" or "electrically connected" to another element, it can be directly connected to the other element or intervening elements may be present. In contrast, when an element is referred to as being "directly connected" to another element, there are no intervening elements present. Moreover, "electrically connect" or "connect" can further refer to the interoperation or interaction between two or more elements.

It will be understood that, in the description herein and throughout the claims that follow, the terms "comprise" or "comprising," "include" or "including," "have" or "having," "contain" or "containing" and the like used herein are to be understood to be open-ended, i.e., to mean including but not limited to.

It will be understood that, in the description herein and throughout the claims that follow, the phrase "and/or" includes any and all combinations of one or more of the associated listed items.

It will be understood that, in the description herein and throughout the claims that follow, unless otherwise defined, all terms (including technical and scientific terms) have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

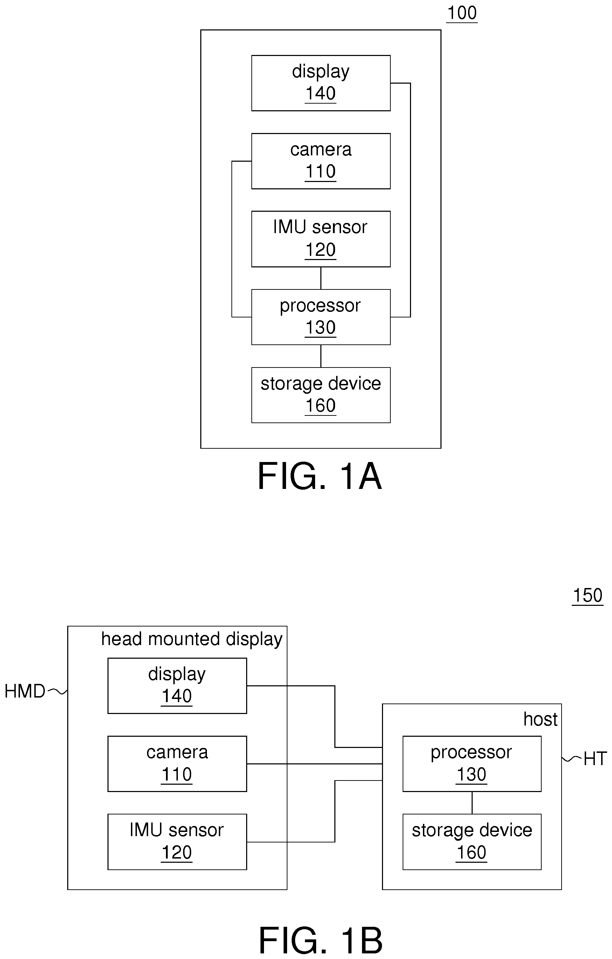

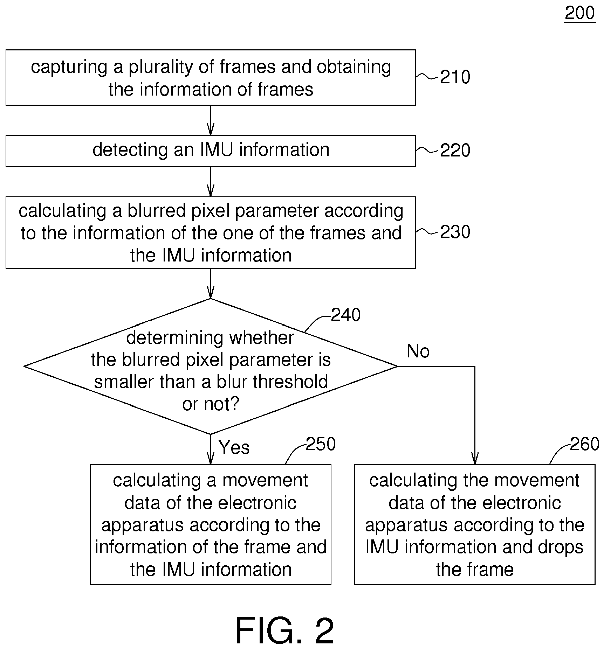

Reference is made to Figs. 1A-1B and Fig. 2. Fig. 1A is a block diagram of a movement tracking system 100 according to one embodiment of the present invention. Fig. 1B is a block diagram of a movement tracking system 150 according to one embodiment of the present invention. Fig. 2 is a flowchart of a movement tracking method according to one embodiment of the present invention.

In one embodiment, as shown in Fig. 1A, the movement tracking system 100 includes a camera 110, an (inertial measurement unit) IMU sensor 120 and a processor 130. In one embodiment, the camera 110 may be implemented by a CCD (Charge Coupled Device) or a CMOS (Complementary Metal-Oxide Semiconductor). In one embodiment, the IMU sensor 120 is configured for detecting the movement of object(s) to obtain the IMU information. In one embodiment, the IMU sensor 120 includes an accelerometer, a G-sensor, a gyroscope, a magnetometer, a magnetic sensor and/or an electrical compass. In one embodiment, the processor 130 can be implemented by a microcontroller, a microprocessor, a digital signal processor, an application specific integrated circuit (ASIC), or a logic circuit. In one embodiment, the movement tracking system 100 further comprises a display 140 to display the image content providing by the processor 130 or other electronic device. In one embodiment, the movement tracking system 100 further comprises a storage device 160 coupled to the processor 130. The storage device 160 is configured for temporally or permanently storing information and/or some parameters. The storage device 160 can be a memory, a disk, a storage media, or a memory card, etc.

In one embodiment, the movement tracking system 100 can be applied in an electronic apparatus. The electronic apparatus can be a head mounted display.

In one embodiment, as shown in Fig. 1B, the movement tracking system 150 includes a head mounted display HMD and a host HT. In this embodiment, the head mounted display HMD includes a camera 110 and an IMU sensor 120. In one embodiment, the head mounted display HMD further comprises a display 140. The host HT comprises a processor 130. In one embodiment, the processor 130 connects to the display 140, the camera 110, and the IMU sensor 120 by wire/wireless. The processor 130 receives the information of frames captured from the camera 110 and the IMU sensor 120 and transmits suitable frame(s) data to the display 140. In one embodiment, the host HT further comprises a storage device 160. In one embodiment, a host HT can be combined in a head mounted display HMD.

The configurations of the components are not limited to Figs. 1A-1B. The components can be adjusted according to the practical condition. In one embodiment, the movement tracking method 200 can be implemented by the movement tracking system 100 or 150. However, the implementation way of the movement tracking method 200 is not limited thereto.

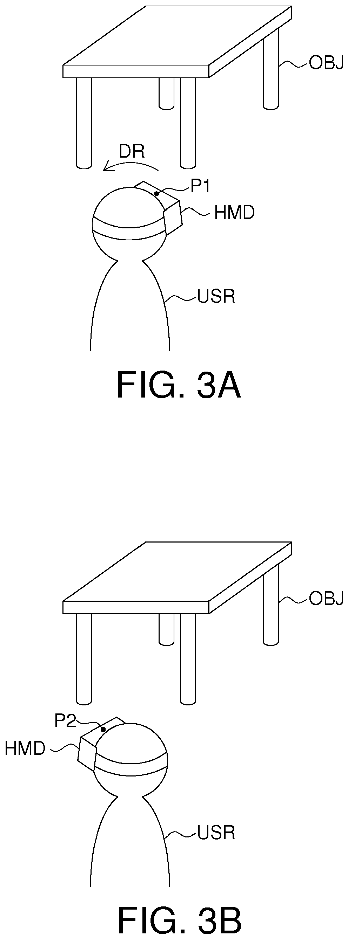

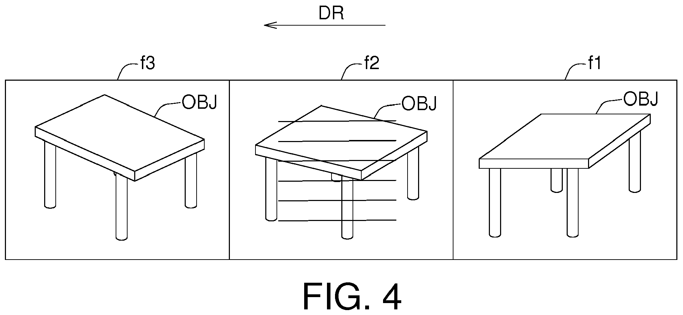

References are made to Figs. 2, 3A-3B and 4. Figs. 3A-3B depict schematic diagrams of capturing frames according to one embodiment of present disclosure. Fig. 4 depicts schematic diagram of captured frames according to one embodiment of present disclosure.

In step 210, a camera 110 captures a plurality of frames. And, the processor 130 obtains information of the frames. In one example, as shown in Fig. 3A, the user USR wears the head mounted display HMD on his/her head. And, the camera 110 of the head mounted display HMD captures the image of the object OBJ, which the user USR is watching, to obtain the information of one of the frames at the initial head position P1. The information includes frame size, pixel data, resolution and/or captured position.

In step 220, an IMU sensor 120 detects IMU information. In one embodiment, the IMU sensor 120 includes at least one accelerometer for detecting acceleration along each X axis, Y axis and Z axis. The IMU sensor 120 also includes a gyroscope for detecting rotation speed of user's head. As such, the IMU information includes an accelerometer parameter (e.g., acceleration along each X axis, Y axis and Z axis) and/or a gyroscope parameter (e.g., rotation speed).

In one embodiment, the IMU sensor 120 continuously detects the IMU information after the head mounted display HMD is powered on. The IMU information is stored in the storage device 160.

In step 230, a processor 130 calculates a blurred pixel parameter according to the information of the one of the frames and the IMU information.

The blurred pixel parameter is the number of blurred pixels in the one of the frames or a percentage of blurred pixels of all the pixels in the frame.

In one embodiment, the processor 130 calculates a blurred pixel parameter according to the information of frame, the accelerometer parameter and the gyroscope parameter. For example, as shown in Figs. 3A-3B, the user USR watches the object OBJ and moves his/her head form the initial head position P1 (see Fig. 3A) to the end head position P2 (see Fig. 3B) along the direction DR. During the moving process, as shown in Fig. 4, the camera 110 captures three frames sequentially. The first frame f1 of the three frames is captured at the initial head position P1. The third frame f3 of the three frames is captured at the end head position P2. The second frame f2 of the three frames is captured when the user USR moving his/her head fast with an acceleration before reaching the end head position P2. Therefore, the second frame f2 is high possibility to be a blurred frame having large amount of the blurred pixels. Values of the accelerometer parameter (e.g., acceleration along each X axis, Y axis and Z axis) detected by the accelerometer and value of the gyroscope parameter (e.g., rotation speed) detected by the gyroscope is also higher when the camera 110 captures the second frame f2. As such, the blurred pixel parameter of second frame f2 is higher than the first frame f1 and third frame f3.

In one embodiment, the number of blurred pixels can be calculated by known algorithm. For example, the formula: v = (Sx * d)/T = z * (K*Sx)/(T*f), the notation v represents the speed of moving object, the notation Sx represents pixel size, the notation f represents the focal length of camera 110, the notation T represents the shuttle speed of camera 110, the notation z represents the distance from the camera 110 to the moving object, and the notation K represents the number of blurred pixels. The parameter of the notations v, Sx, f, T and z can be obtained by the information of the frames (e.g, the parameter of the notation Sx), the IMU information (e.g., the parameter of the notation v), pre-configured data (e.g., the parameter of the notation f, the parameter of the notation z) and/or inputted data (e.g., the parameter of the notation T). Once the parameter of the notations v, Sx, f, T and z are obtained, the notation K (which represents the number of blurred pixels) can be calculated. The method for calculating the number of blurred pixels is not limited thereto.

In step 240, the processor 130 determines whether the blurred pixel parameter is smaller than a blur threshold or not. If the blurred pixel parameter is smaller than the blur threshold, step 250 is performed. If the blurred pixel parameter is higher than or equal to the blur threshold, step 260 is performed.

In one embodiment, the blur threshold can be a percentage threshold. For example, if the blurred pixel parameter is 20% and the blur threshold 50%, the processor 130 determines that the blurred pixel parameter is smaller than a blur threshold. For example, if the blurred pixel parameter is 80% and the blur threshold 50%, the processor 130 determines that the blurred pixel parameter is not smaller than a blur threshold.

In step 250, the processor 130 calculates a movement data of the electronic apparatus (e.g., head mounted display HMD) according to the information of the frame (e.g., second frame f2) and the IMU information. The movement of the electronic apparatus can be tracked according to the movement data.

In one embodiment, when the electronic apparatus is the head mounted display HMD, a frame content shown by the head mounted display HMD is generated according to the moving distance. For example, the moving distance of the head mounted display HMD can be calculated according to the movement data, and the frame content shown by the head mounted display HMD is generated according to the moving distance. As such, the user USR can consistently see the frame content corresponding to the movement of his/her head, without uncomfortable or seasick feeling. Some methods for generating the movement data is described as following paragraphs.

In one embodiment, the movement data comprises a rotation degree and a spatial coordinate, and a moving distance of the electronic apparatus is calculated according to the rotation degree and the spatial coordinate.

Because the frame is clear (in step 250), the processor 130 can precisely find the spatial coordinates of the feature points in the frames (e.g., searching the spatial coordinates of the feature points by the color, the shape, and/or the predicted coordinate of the object OBJ in the frames) for generating the movement data.

The rotation degree also can be calculated precisely according to the spatial coordinates of the feature points between two frames in sequence.

In one embodiment, the rotation speed detected by the gyroscope, the acceleration detected by the accelerometer, the depth information obtained from the information of the frame. And, the coordinates of feature points in the previous frame also can use for calculating the movement data.

Thus, the processor 130 has enough information to calculate the movement data according to the information of the frame and the IMU information.

In one embodiment, the movement data can be generated by known algorithm. For example, the movement data is generated by substituting the information of the frame (e.g., some coordinates of some feature points) into a triangulation algorithm and taking the IMU information as reference data in the same time, to obtain the precise result. Due to the triangulation algorithm is a known algorithm, the detailed descriptions thereof will be omitted.

In step 260, the processor 130 calculates the movement data of the electronic apparatus according to the IMU information and drops the frame (e.g., second frame f2). Because the frame has too much blurred pixel, the blurred frame is not applied in step 260.

In this step, the processor 130 calculates the movement data of the electronic apparatus only according to the IMU information without using the frame having too much blurred pixel, for preventing calculating the movement data with lower accuracy result.

Further, the movement tracking method 200 can be applied for the condition of capturing multiple frames. In one embodiment, the camera 110 further captures information of another frame (e.g., the third frame f3 in Fig. 4), and the processor calculates another blurred pixel parameter according to the information of another frame and the IMU information by the processor. If the blurred pixel parameter of the frame (e.g., second frame f2 in Fig. 4) is higher than the blur threshold and the blurred pixel parameter of another frame is smaller than or equal to the blur threshold, the processor 130 calculates the movement data of the electronic apparatus according to information of another frame and the IMU information.

In this embodiment, the movement tracking method and a movement tracking system can precisely calculate the moving distance of the electronic apparatus according to the movement data, and the frame content shown by the electronic apparatus is generated according to the moving distance. The user can consistently see the frame content corresponding to the movement of his/her head. As such, the user can truthfully interact with the virtual reality content and pleasantly watch the virtual reality content.

## Claims

1. A movement tracking method for an electronic apparatus, comprising:
obtaining (210) information of a first frame captured by a camera (110);
obaining (220) inertial measurement unit information, IMU information, from an inertial measurement unit sensor, IMU sensor (120);
**characterised by**
calculating (230), by a processor (130), a first blurred pixel parameter of the first frame according to the information of the first frame and the IMU information, the first blurred pixel parameter comprising the number of blurred pixels in the first frame or a percentage of blurred pixels of all the pixels in the first frame;
determining (240) whether the first blurred pixel parameter of the first frame is smaller than a blur threshold or not by the processor (130);
if the first blurred pixel parameter of the first frame is smaller than the blur threshold, calculating (250) a movement data of the electronic apparatus according to the information of the first frame and the IMU information; and
if the first blurred pixel parameter is higher than or equal to the blur threshold, the processor (130) calculates (260) the movement data of the electronic apparatus according to the IMU information and drops the first frame.

2. The movement tracking method of claim 1, wherein the IMU information comprises an accelerometer parameter and/or a gyroscope parameter, the movement tracking method further comprising:
calculating (230) the first blurred pixel parameter according to the accelerometer parameter and/or the gyroscope parameter.

3. The movement tracking method according to any one of claims 1 to 2, wherein the movement data comprises a rotation degree and/or a spatial coordinate, and a moving distance of the electronic apparatus is calculated according to the rotation degree and/or the spatial coordinate.

4. The movement tracking method of claim 3, wherein the electronic apparatus is a head mounted display, and a frame content shown by the head mounted display is generated according to the moving distance.

5. The movement tracking method according to any one of claims 1 to 4, wherein the movement data is generated by substituting the information of the first frame and taking the IMU information as a reference data into a triangulation algorithm.

6. The movement tracking method according to any one of claims 1 to 5, further comprising:
obtaining information of a second frame from the camera; and
calculating a second blurred pixel parameter according to the information of the second frame and the IMU information by the processor;
wherein if the second blurred pixel parameter is smaller than the blur threshold and the second blurred pixel parameter is higher than or equal to the blur threshold, the processor calculates the movement data of the electronic apparatus according to the information of the second frame and the IMU information.

7. A movement tracking system for an electronic apparatus, comprising:
a camera (110) for capturing a first frame;
an inertial measurement unit sensor, IMU sensor (120), for detecting inertial measurement unit information, IMU information; and a processor (130);
**characterised in that**
the processor (130) is configured to obtain
information of the first frame and calculating a first blurred pixel parameter of the first frame according to information of the first frame and the IMU information, the first blurred pixel parameter comprising the number of blurred pixels in the first frame or a percentage of blurred pixels of all the pixels in the first frame;
wherein the processor (130) determines whether the first blurred pixel parameter is smaller than a blur threshold or not;
if the first blurred pixel parameter of the first frame is smaller than the blur threshold, the processor (130) calculates a movement data of the electronic apparatus according to the information of the first frame and the IMU information; and
if the first blurred pixel parameter is higher than or equal to the blur threshold, the processor (130) calculates the movement data of the electronic apparatus according to the IMU information and drops the first frame.

8. The movement tracking system of claim 7, wherein the IMU information comprises an accelerometer parameter and/or a gyroscope parameter, and the processor calculates the first blurred pixel parameter according to the accelerometer parameter and/or gyroscope parameter.

9. The movement tracking system according to any one of claims 7 or 8, wherein the movement data comprises a rotation degree and/or a spatial coordinate, and a moving distance of the electronic apparatus is calculated according to the rotation degree and/or the spatial coordinate.

10. The movement tracking system of claim 9, wherein the electronic apparatus is a head mounted display, and a frame content shown by the head mounted display is generated according to the moving distance.

11. The movement tracking system according to any one of claims 7 to 10, wherein the movement data is generated by substituting the information of the first frame and taking the IMU information as reference data into a triangulation algorithm.

12. The movement tracking system according to any one of claims 7 to 11, wherein the camera (110) captures information of a second frame, and the processor (130) calculates a second blurred pixel parameter according to the information of the second frame and the IMU information by the processor;
wherein if the second blurred pixel parameter is smaller than the blur threshold and the another second pixel parameter is higher than or equal to the blur threshold, the processor (130) calculates the movement data of the electronic apparatus according to the information of the second frame and the IMU information.

## Patentansprüche

1. Ein Bewegungsverfolgungsverfahren für eine elektronische Vorrichtung, das Folgendes beinhaltet:
Erhalten (210) von Informationen eines ersten durch eine Kamera (110) aufgenommenen Einzelbilds;
Erhalten (220) von Informationen einer inertialen Messeinheit, IME-Informationen, von einem Sensor einer inertialen Messeinheit, IME-Sensor, (120);
**gekennzeichnet durch** Folgendes:
Berechnen (230), durch einen Prozessor (130), eines ersten Parameters unscharfer Pixel des ersten Einzelbilds gemäß den Informationen des ersten Einzelbilds und den IME-Informationen, wobei der erste Parameter unscharfer Pixel die Anzahl unscharfer Pixel in dem ersten Einzelbild oder einen Prozentanteil unscharfer Pixel aller Pixel in dem ersten Einzelbild beinhaltet;
Bestimmen (240), ob der erste Parameter unscharfer Pixel des ersten Einzelbilds kleiner als ein Unschärfeschwellenwert ist oder nicht, durch den Prozessor (130);
wenn der erste Parameter unscharfer Pixel des ersten Einzelbilds kleiner als der Unschärfeschwellenwert ist, Berechnen (250) von Bewegungsdaten der elektronischen Vorrichtung gemäß den Informationen des ersten Einzelbilds und den IME-Informationen; und
wenn der erste Parameter unscharfer Pixel größer als oder gleich dem Unschärfeschwellenwert ist, berechnet (260) der Prozessor (130) die Bewegungsdaten der elektronischen Vorrichtung gemäß den IME-Informationen und lässt das erste Einzelbild weg.

2. Bewegungsverfolgungsverfahren gemäß Anspruch 1, wobei die IME-Informationen einen Beschleunigungsmesserparameter und/oder einen Gyroskopparameter beinhalten, wobei das Bewegungsverfolgungsverfahren ferner Folgendes beinhaltet: Berechnen (230) des ersten Parameters unscharfer Pixel gemäß dem Beschleunigungsmesserparameter und/oder dem Gyroskopparameter.

3. Bewegungsverfolgungsverfahren gemäß einem der Ansprüche 1 bis 2, wobei die Bewegungsdaten einen Drehungsgrad und/oder eine räumliche Koordinate beinhalten und eine Bewegungsdistanz der elektronischen Vorrichtung gemäß dem Drehungsgrad und/oder der räumlichen Koordinate berechnet wird.

4. Bewegungsverfolgungsverfahren gemäß Anspruch 3, wobei die elektronische Vorrichtung ein kopfverbundenes Sichtgerät ist und ein durch das kopfverbundene Sichtgerät gezeigter Einzelbildinhalt gemäß der Bewegungsdistanz erzeugt wird.

5. Bewegungsverfolgungsverfahren gemäß einem der Ansprüche 1 bis 4, wobei die Bewegungsdaten durch das Ersetzen der Informationen des ersten Einzelbilds und das Verwenden der IME-Informationen als Bezugsdaten für einen Triangulierungsalgorithmus erzeugt werden.

6. Bewegungsverfolgungsverfahren gemäß einem der Ansprüche 1 bis 5, das ferner Folgendes beinhaltet:
Erhalten von Informationen eines zweiten Einzelbilds von der Kamera; und
Berechnen eines zweiten Parameters unscharfer Pixel gemäß den Informationen des zweiten Einzelbilds und den IME-Informationen durch den Prozessor;
wobei, wenn der zweite Parameter unscharfer Pixel kleiner als der Unschärfeschwellenwert ist und der zweite Parameter unscharfer Pixel größer als oder gleich dem Unschärfeschwellenwert ist, der Prozessor die Bewegungsdaten der elektronischen Vorrichtung gemäß den Informationen des zweiten Einzelbilds und den IME-Informationen berechnet.

7. Ein Bewegungsverfolgungssystem für eine elektronische Vorrichtung, das Folgendes beinhaltet:
eine Kamera (110) zum Aufnehmen eines ersten Einzelbilds;
einen Sensor einer inertialen Messeinheit, IME-Sensor, (120) zum Detektieren von Informationen einer inertialen Messeinheit, IME-Informationen;
und einen Prozessor (130);
**dadurch gekennzeichnet, dass**
der Prozessor (130) konfiguriert ist, Informationen des ersten Einzelbilds zu erhalten und einen ersten Parameter unscharfer Pixel des ersten Einzelbilds gemäß den Informationen des ersten Einzelbilds und den IME-Informationen zu berechnen, wobei der erste Parameter unscharfer Pixel die Anzahl unscharfer Pixel in dem ersten Einzelbild oder einen Prozentanteil unscharfer Pixel aller Pixel in dem ersten Einzelbild beinhaltet;
wobei der Prozessor (130) bestimmt, ob der erste Parameter unscharfer Pixel kleiner als ein Unschärfeschwellenwert ist oder nicht;
wenn der erste Parameter unscharfer Pixel des ersten Einzelbilds kleiner als der Unschärfeschwellenwert ist, der Prozessor (130) Bewegungsdaten der elektronischen Vorrichtung gemäß den Informationen des ersten Einzelbilds und den IME-Informationen berechnet; und
wenn der erste Parameter unscharfer Pixel größer als oder gleich dem Unschärfeschwellenwert ist, der Prozessor (130) die Bewegungsdaten der elektronischen Vorrichtung gemäß den IME-Informationen berechnet und das erste Einzelbild weglässt.

8. Bewegungsverfolgungssystem gemäß Anspruch 7, wobei die IME-Informationen einen Beschleunigungsmesserparameter und/oder einen Gyroskopparameter beinhalten und der Prozessor den ersten Parameter unscharfer Pixel gemäß dem Beschleunigungsmesserparameter und/oder dem Gyroskopparameter berechnet.

9. Bewegungsverfolgungssystem gemäß einem der Ansprüche 7 oder 8, wobei die Bewegungsdaten einen Drehungsgrad und/oder eine räumliche Koordinate beinhalten und eine Bewegungsdistanz der elektronischen Vorrichtung gemäß dem Drehungsgrad und/oder der räumlichen Koordinate berechnet wird.

10. Bewegungsverfolgungssystem gemäß Anspruch 9, wobei die elektronische Vorrichtung ein kopfverbundenes Sichtgerät ist und ein durch das kopfverbundene Sichtgerät gezeigter Einzelbildinhalt gemäß der Bewegungsdistanz erzeugt wird.

11. Bewegungsverfolgungssystem gemäß einem der Ansprüche 7 bis 10, wobei die Bewegungsdaten durch das Ersetzen der Informationen des ersten Einzelbilds und das Verwenden der IME-Informationen als Bezugsdaten für einen Triangulierungsalgorithmus erzeugt werden.

12. Bewegungsverfolgungssystem gemäß einem der Ansprüche 7 bis 11, wobei die Kamera (110) Informationen eines zweiten Einzelbilds aufnimmt und der Prozessor (130) einen zweiten Parameter unscharfer Pixel gemäß den Informationen des zweiten Einzelbilds und den IME-Informationen durch den Prozessor berechnet;
wobei, wenn der zweite Parameter unscharfer Pixel kleiner als der Unschärfeschwellenwert ist und der weitere zweite Pixelparameter größer als oder gleich dem Unschärfeschwellenwert ist, der Prozessor (130) die Bewegungsdaten der elektronischen Vorrichtung gemäß den Informationen des zweiten Einzelbilds und den IME-Informationen berechnet.

## Revendications

1. Un procédé de suivi de déplacement pour un appareil électronique, comprenant :
le fait d'obtenir (210) des informations d'une première trame capturée par une caméra (110) ;
le fait d'obtenir (220) des informations d'unité de mesure inertielle, informations d'IMU, à partir d'un capteur d'unité de mesure inertielle, capteur d'IMU (120) ;
**caractérisé par**
le fait de calculer (230), à l'aide d'un processeur (130), un premier paramètre de pixels flous de la première trame selon les informations de la première trame et les informations d'IMU, le premier paramètre de pixels flous comprenant le nombre de pixels flous dans la première trame ou un pourcentage de pixels flous de tous les pixels dans la première trame ;
le fait de déterminer (240) si le premier paramètre de pixels flous de la première trame est inférieur à un seuil de flou ou non à l'aide du processeur (130) ;
si le premier paramètre de pixels flous de la première trame est inférieur au seuil de flou, le fait de calculer (250) des données de déplacement de l'appareil électronique selon les informations de la première trame et les informations d'IMU ; et
si le premier paramètre de pixels flous est supérieur ou égal au seuil de flou, le processeur (130) calcule (260) les données de déplacement de l'appareil électronique selon les informations d'IMU et abandonne la première trame.

2. Le procédé de suivi de déplacement de la revendication 1, dans lequel les informations d'IMU comprennent un paramètre d'accéléromètre et/ou un paramètre de gyroscope, le procédé de suivi de déplacement comprenant en outre :
le fait de calculer (230) le premier paramètre de pixels flous selon le paramètre d'accéléromètre et/ou le paramètre de gyroscope.

3. Le procédé de suivi de déplacement selon l'une quelconque des revendications 1 à 2, dans lequel les données de déplacement comprennent un degré de rotation et/ou une coordonnée spatiale, et une distance de' déplacement de l'appareil électronique est calculée selon le degré de rotation et/ou la coordonnée spatiale.

4. Le procédé de suivi de déplacement de la revendication 3, dans lequel l'appareil électronique est un visiocasque, et un contenu de trame représenté par le visiocasque est généré selon la distance de déplacement.

5. Le procédé de suivi de déplacement selon l'une quelconque des revendications 1 à 4, dans lequel les données de déplacement sont générées en substituant les informations de la première trame et en prenant les informations d'IMU en tant que données de référence dans un algorithme de triangulation.

6. Le procédé de suivi de déplacement selon l'une quelconque des revendications 1 à 5, comprenant en outre :
le fait d'obtenir des informations d'une deuxième trame à partir de la caméra ; et
le fait de calculer un deuxième paramètre de pixels flous selon les informations de la deuxième trame et les informations d'IMU à l'aide du processeur ;
dans lequel si le deuxième paramètre de pixels flous est inférieur au seuil de flou et que le deuxième paramètre de pixels flous est supérieur ou égal au seuil de flou, le processeur calcule les données de déplacement de l'appareil électronique selon les informations de la deuxième trame et les informations d'IMU.

7. Un système de suivi de déplacement pour un appareil électronique, comprenant :
une caméra (110) pour capturer une première trame ;
un capteur d'unité de mesure inertielle, capteur d'IMU (120), pour détecter des informations d'unité de mesure inertielle, informations d'IMU ;
et un processeur (130) ;
**caractérisé en ce que**
le processeur (130) est configuré pour obtenir des informations de la première trame et calculer un premier paramètre de pixels flous de la première trame selon des informations de la première trame et des informations d'IMU, le premier paramètre de pixels flous comprenant le nombre de pixels flous dans la première trame ou un pourcentage de pixels flous de tous les pixels dans la première trame ;
dans lequel le processeur (130) détermine si le premier paramètre de pixels flous est inférieur à un seuil de flou ou non ;
si le premier paramètre de pixels flous de la première trame est inférieur au seuil de flou, le processeur (130) calcule des données de déplacement de l'appareil électronique selon les informations de la première trame et les informations d'IMU ; et
si le premier paramètre de pixels flous est supérieur ou égal au seuil de flou, le processeur (130) calcule les données de déplacement de l'appareil électronique selon les informations d'IMU et abandonne la première trame.

8. Le système de suivi de déplacement de la revendication 7, dans lequel les informations d'IMU comprennent un paramètre d'accéléromètre et/ou un paramètre de gyroscope, et le processeur calcule le premier paramètre de pixels flous selon le paramètre d'accéléromètre et/ou le paramètre de gyroscope.

9. Le système de suivi de déplacement selon l'une quelconque des revendications 7 ou 8, dans lequel les données de déplacement comprennent un degré de rotation et/ou une coordonnée spatiale, et une distance de déplacement de l'appareil électronique est calculée selon le degré de rotation et/ou la coordonnée spatiale.

10. Le système de suivi de déplacement de la revendication 9, dans lequel l'appareil électronique est un visiocasque, et un contenu de trame représenté par le visiocasque est généré selon la distance de déplacement.

11. Le système de suivi de déplacement selon l'une quelconque des revendications 7 à 10, dans lequel les données de déplacement sont générées en substituant les informations de la première trame et en prenant les informations d'IMU en tant que données de référence dans un algorithme de triangulation.

12. Le système de suivi de déplacement selon l'une quelconque des revendications 7 à 11, dans lequel la caméra (110) capture des informations d'une deuxième trame, et le processeur (130) calcule un deuxième paramètre de pixels flous selon les informations de la deuxième trame et les informations d'IMU par le processeur ;
dans lequel si le deuxième paramètre de pixels flous est inférieur au seuil de flou et que le deuxième autre paramètre de pixels est supérieur ou égal au seuil de flou, le processeur (130) calcule les données de déplacement de l'appareil électronique selon les informations de la deuxième trame et les informations d'IMU.
